# EUROPEAN PATENT SPECIFICATION

(11) **EP 1 687 139 B1**
(45) Date of publication and mention of the grant of the patent: **10.02.2010**
(21) Application number: 04799299.5
(22) Date of filing: 12.11.2004
(51) Int. Cl.: B32B 27/12, B32B 5/18, B32B 5/08, A47C 27/14

(54) **LAMINATED BODY SUPPORT ELEMENT**
LAMINIERTES KÖRPERSTÜTZELEMENT
ELEMENT LAMINE DE SUPPORT DU CORPS

(30) Priority: 12.11.2003 IE 20030849
(43) Date of publication of application: 09.08.2006
(73) Proprietor: LANCASTRIA LIMITED, Dublin 2 (IE)
(72) Inventor: WOOLFSON, David, Bray County Wicklow (IE); HACKETT, Padraig, Dublin 11 (IE)
(74) Representative: Schütte, Gearoid
(86) International application number: PCT/IE2004/000158
(87) International publication number: WO 2005/046988

(56) References cited:
- EP-A- 0 529 671
- DE-U1- 20 309 794
- US-A- 5 902 014
- US-A- 6 159 574
- DATABASE WPI Section Ch, Week 199238 Derwent Publications Ltd., London, GB; Class A25, AN 1992-311554 XP002316760 & JP 04 215710 A (MITSUBISHI MOTOR CORP) 6 August 1992 (1992-08-06)

## Description

### TECHNICAL FIELD

This invention relates to laminated body contact supports such as mattresses, cushions, pillows and the like products.

### BACKGROUND ART

It is known to use viscoelastic foams in mattresses, cushions and the like because of their desirable properties. Examples of such products are to be found in our earlier filed European Patent Application No. 01650114.0 (Publication No. EP 1192925). Such viscoelastic foams have a low rebound property, are temperature sensitive and tend to mould themselves to the shape of a persons body in contact with the mattress to provide a more uniform pressure distribution for increased comfort. This is particularly advantageous in hospital beds with a view to minimising problems with bedsores and increasing a patients comfort generally. These types of foam are now finding increasing application in domestic furniture, particularly bedding.

These mattresses, in common with conventional mattresses, allow the dissipation of perspiration from a persons body through the mattress in the form of water vapour, that is they are vapour permeable. However a problem arises in that when in use the atmosphere within the mattress has a relatively high humidity due to this transient water vapour. In such an atmosphere of relatively high humidity and when subject to the stresses applied to the mattress by the weight of the person being supported and due to their movement on the mattress, the upper surface of the viscoelastic foam may become cracked, particularly in those areas subjected to the greatest stress. It is exacerbated by the prolonged stresses caused by patients sitting in a semi reclined position on the mattress and shifting their position. If the visco-elastic foam is stretched beyond its yield then a stress crack will result. Over a period of time multiple cracks may appear in the foam in the seating position and the comfort and performance of the mattress is adversely affected.

Further, while viscoelastic foams are permeable the migration of water vapour through the layer of foam is relatively slow. In use the portions of the mattress in contact with the user tends to heat up due to this warm water vapour and this is undesirable for the comfort of the user and may promote bed sores. In patent specification US 6159574 there is disclosed a laminated visco-elastic support such as a cushion or mattress which includes at least one visco-elastic foam layer. A thin layer of reticulated filter polyurethane foam is bonded to an outer face of the support to promote increased air circulation adjacent a persons skin for increased comfort of the user. While this construction may provide some improvement it does not effectively solve the aforementioned problems. Migration of water vapour through the polyurethane foam is also relatively slow. DE20309794U1 discloses a laminated support element comprising a foam layer with a breathable three dimensional fabric on a top surface of the foam layer. US 5,902,014 discloses a vehicle seat incorporating a ventilation layer of large meshed, spaced knit covering an upholstery layer. An upholstery covering including as a compressively elastic filing layer a double-knit spaced fabric is disclosed in EP0529671. In JP4215710 there is described an air-permeable seat having a surface layer of knitted fabric.

The present invention is directed towards overcoming these problems.

### SUMMARY OF THE INVENTION

According to the invention there is provided a laminated body contact support element for a mattress, cushion or the like including an inner layer of viscoelastic foam material and an air permeable outer layer of stretchable material laminated onto a top surface of the viscoelastic foam layer, **characterised in that** the outer layer comprises a highly breathable three dimensional fabric which forms an air layer above the viscoelastic foam layer, the maximum stretch of the outer layer material being less than the breaking stretch of the underlying viscoelastic foam layer material.

The outer layer material is very breathable so that it does not trap moisture and maintains a comfortable microclimate for the user. It also has two-way stretchability so as not to diminish or at least only minimally effect the beneficial properties of the viscoelastic foam layer. Further, the outer layer has a relatively high strength so that it will not crack in use.

In a particularly preferred embodiment the outer layer comprises a spacer fabric. The spacer fabric essentially comprises a pair of spaced-apart outer layers interconnected by spaced-apart internal cross members to provide a very open 3-dimensional fabric.

In a particularly preferred embodiment the outer layer comprises a spaced knitted fabric having a pair of spaced-apart knitted layers with spacer yarns extending between said knitted layers, one of said knitted layers being laminated onto the top surface of the viscoelastic foam layer.

In a further embodiment the tensile strength of the outer layer material is greater than the tensile strength of the viscoelastic foam layer material.

In one embodiment the outer layer has a thickness in the range 0.5mm to 30mm. In another embodiment the thickness is in the range 3mm to 6mm.

In another embodiment the outer layer has a stretchability in the range 20% to 200% and most preferably in the range 40% to 140%.

The outer layer may be laminated or bonded to the viscoelastic foam layer in any suitable fashion. For example, a solvent based adhesive or water based adhesive could be used. Other possible bonding methods include the use of hot melt adhesive or flame lamination. Further, the outer reinforcing layer can be bonded in a continuous or semi-continuous fashion to the viscoelastic foam layer.

In a preferred embodiment the outer layer comprises a highly breathable fabric. This conveniently allows good airflow through the reinforcing layer which will be closest to the person in use, minimising heat and humidity between the mattress and the person in use for added comfort.

The outer layer may be of any suitable material such as knitted polyester or polyurethane coated synthetic material (polyester, nylon and the like) suitable for medical mattresses or other fabric material.

In another embodiment outer layers are bonded to both the top surface and a bottom surface of the viscoelastic layer. This provides a reversible laminated support element.

In another embodiment the bottom surface of the viscoelastic foam layer is laminated onto a support substrate. Various types of support substrate are possible, for example foam material, springs, airbed bladder or baffles, water bladder or baffles, latex and the like.

In another embodiment the support substrate comprises a foam layer. Conveniently a standard foam or a combustion modified foam layer may be provided.

In a further embodiment the laminated support further includes a vapour permeable outer cover.

### BRIEF DESCRIPTION OF THE DRAWINGS

The invention will be more clearly understood by the following description of some embodiments thereof, given by way of example only, with reference to the accompanying drawings, in which:
Fig. 1 is a perspective, partially cut-away, view of a mattress according to the invention;
Fig. 2 is a detail sectional elevational view showing portion of the mattress;
Fig. 3 is a view similar to Fig. 2 of portion of another mattress according to the invention;
Fig. 4 is a perspective view similar to Fig. 1 showing another mattress;
Fig. 5 is a perspective, partially cut-away, view of a cushion according to the invention; and
Fig. 6 is a view similar to Fig. 5 of another cushion.

### DETAILED DESCRIPTION OF THE PREFERRED EMBODIMENTS

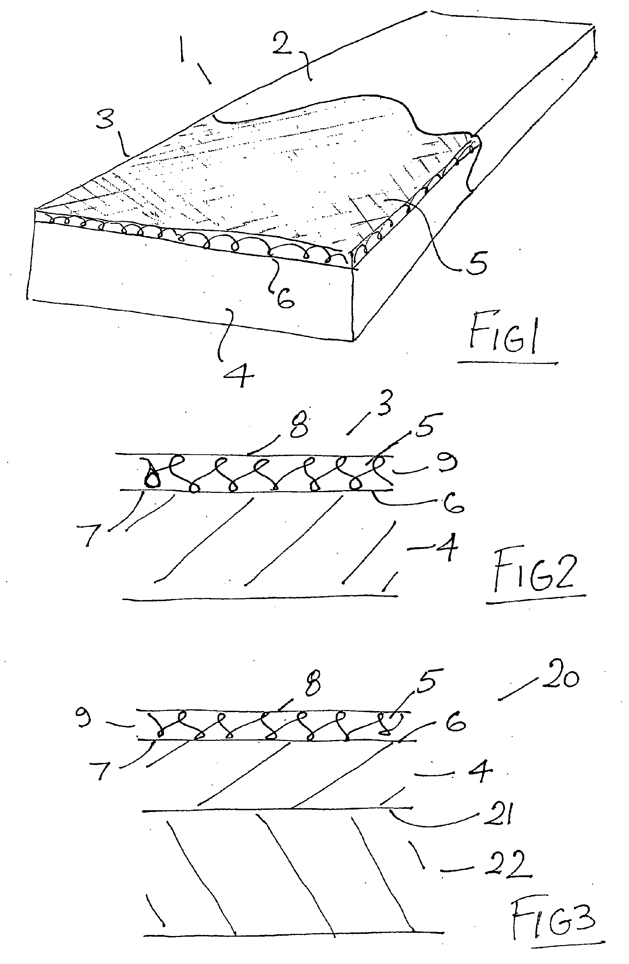

Referring to the drawings, and initially to Figs. 1 and 2 thereof, there is illustrated a mattress, mattress overlay or trolley pad according to the invention indicated generally by the reference numeral 1. The mattress 1 comprises an outer cover 2 extending about a resilient core 3. In accordance with the invention the core 3 is formed from a block or inner layer 4 of viscoelastic foam with a vapour permeable reinforcing outer layer 5 of stretchable material laminated onto a top surface 6 of the viscoelastic foam layer 4.

The reinforcing layer 5 comprises a spaced knitted fabric having a pair of spaced-apart knitted layers, namely an inner layer 7 and an outer layer 8 with spacer yarns 9 between said knitted layers 7, 8. A suitable material for forming the reinforcing layer 5 is 3 mesh (Registered Trade Mark) material produced by Mueller Textil of Wiehl, Germany, which is a three-dimensional spacer polyester fabric comprising two warp-knitted layers which are connected by pile monofilaments in a single knitting process. This reinforcing layer 5 may typically be either 3mm or 6mm thick. It is bonded to the top surface 6 of the viscoelastic foam layer 4 in any suitable fashion such as by adhesive. The viscoelastic foam layer may be any suitable thickness, and in many applications will be about 60mm thick.

In use, the mattress 1 is used in conventional fashion with the reinforcing layer 3 uppermost. During use the reinforcing layer 5 will resiliently deform following the contour of the viscoelastic foam layer 4 at the same time reinforcing the top surface 6 of the viscoelastic foam layer 4 to prevent cracking in the viscoelastic foam layer 4. The reinforcing layer 5 also provides an air layer which aids in dissipating heat and moisture away from the body of a person, lying on the mattress 1 in use for their increased comfort.

Referring now to Fig. 3 an alternative construction for the core is shown and indicated generally by the reference numeral 20. Parts similar to those described previously are assigned the same reference numerals. In this case a bottom surface 21 of the viscoelastic foam layer 4 is laminated onto a substrate formed by a bottom foam layer 22 of a standard or a combustion modified foam.

The viscoelastic foam layer 4 is typically in the order of 70-150mm thick but may be any suitable thickness. The foam substrate may also be in the range 70-150mm thick or any other suitable thickness. Both layers 4, 22 may be the same or different thicknesses. The substrate foam layer 22 material has a density in the order of 35-50kg/m³. Other densities are also possible.

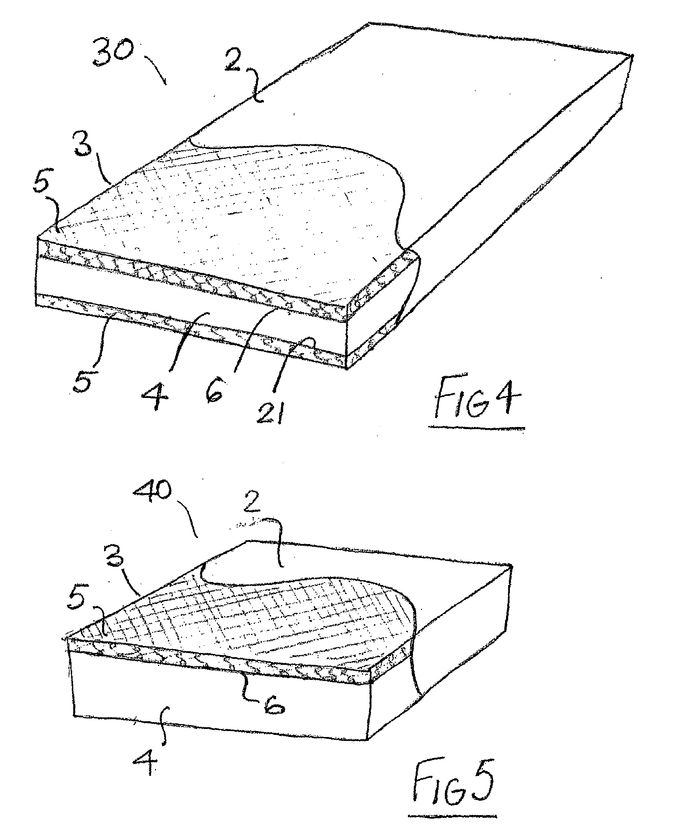

Where a mattress or cushion simply comprising the viscoelastic foam is required this may be sandwiched between two other layers of the reinforcing material so it can be used either side up. Such a mattress arrangement is shown in Fig. 4 and indicated generally by the reference numeral 30. Parts similar to those described previously are assigned the same reference numerals. In this case a central viscoelastic foam layer 4 is sandwiched between a pair of outer reinforcing layers 5.

Referring now to Fig. 5 there is shown a cushion according to another embodiment of the invention indicated generally by the reference numeral 40. Parts similar to those described previously are assigned the same reference numerals. The cushion 40 has an outer cover 2 extending about a resilient core 3 comprising an inner layer 4 of viscoelastic foam on top of which is laminated an outer reinforcing layer 5 of the spaced knitted fabric. The cushion 40 could be used for example in medical applications for wheelchairs or could be used as a seat cushion for furniture generally.

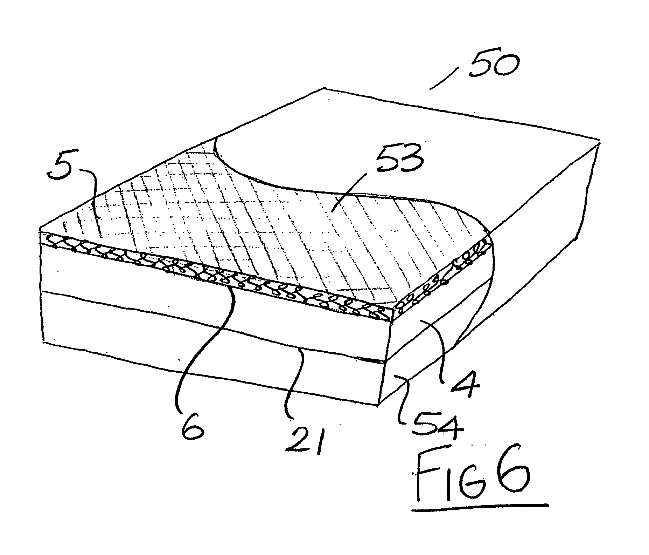

Referring now to Fig. 6 there is shown another cushion indicated generally by the reference numeral 50. Parts similar to those described previously are assigned the same reference numerals. In this case a resilient core 53 of the cushion 50 comprises a layer 4 of viscoelastic foam on a top surface 6 of which is laminated a reinforcing layer 5 of the spacer fabric. The bottom surface 21 of the viscoelastic foam layer 4 is laminated onto a substrate formed by a bottom foam layer 54 of a standard or a combustion modified foam material.

While the invention has been described in the embodiments in relation to mattresses and cushions it will be appreciated that it can be applied to body contact supports generally. These also include overlays - which can be placed on top of conventional mattresses to provide more even pressure distribution and increase comfort - trolley pads, wheelchair cushions, seat cushions, headrests, pillows and the like which incorporate viscoelastic foam, or indeed any applications in which viscoelastic foam panels are subjected to relatively high humidity and stress in order to prevent cracking of the viscoelastic foam and/or provide improved heat and moisture dissipation. The term mattress as used in this patent specification includes such body contact supports.

If will be appreciated that the invention provides a laminated support with an air layer formed on top of a viscoelastic foam layer. This modified viscoelastic foam layer may be mounted on top of any suitable substrate such as foam, springs, airbed bladder or baffles, water bladder or baffles, latex and so on for the purposes of providing a support surface which will typically be in the form of a mattress, cushion or pillow or the like. The air layer forms a breathable skin on the surface of the viscoelastic foam layer. This facilitates the provision of a comfortable microclimate adjacent the skin of the user when lying or seated on the support element. Ideally the outer layer has two-way stretch to allow it to expand in sympathy with the viscoelastic foam whilst at the same time the extent of stretch in the outer layer should be less than the extension at break figure for the underlying viscoelastic foam. Preferably also the tensile strength of the outer air layer material should exceed that of the viscoelastic foam and be such that the normal use of the mattress will not cause it to rupture. Also, this outer air layer material is breathable and water permeable to maintain a comfortable microclimate for the user.

It will be appreciated that the viscoelastic foam layer may be of any suitable thickness, and this will largely depend on the application for which the support element is being used. Generally speaking it is envisaged that the thickness of the viscoelastic material will usually fall within the range 50mm-150mm. Various different densities of viscoelastic foam material are also possible. Densities in the range 50-110kg per m³ have been found suitable in many mattress and seating applications for example.

Regarding the cover which will normally be provided about the support element, various different covers are possible which are vapour permeable. Suitable covers include a polyurethane or nylon coating on a polyester backing fabric to provide a vapour permeable cover which is waterproof and may be treated so that it is antibacterial and fungostatic.

The invention is not limited to the embodiments hereinbefore described which may be varied in both construction and detail within the scope of the appended claims.

## Claims

1. A laminated body contact support element (1), for a mattress, cushion or the like including an inner layer (4) of viscoelastic foam material and an air permeable outer layer (5) of stretchable material laminated onto a top surface (6) of the viscoelastic foam layer (4), **characterised in that** the outer layer (5) comprises a highly breathable three dimensional fabric which forms an air layer above the viscoelastic foam layer (4), the maximum stretch of the outer layer (5) material being less than the breaking stretch of the underlying viscoelastic foam layer (4) material.

2. A laminated support as claimed in claim 1 wherein the outer layer (5) comprises a spacer fabric (7, 8, 9).

3. A laminated support (1) as claimed in any preceding claim wherein the outer layer (5) comprises a spaced knitted fabric having a pair of spaced-apart knitted layers (7, 8) with spacer yarns (9) extending between said knitted layers (7, 8), one of said knitted layers (7) being laminated onto the top surface (6) of the viscoelastic foam layer (4).

4. A laminated support (1) as claimed in any preceding claim wherein the tensile strength of the outer layer (5) material is greater than the tensile strength of the viscoelastic foam layer (4) material.

5. A laminated support (1) as claimed in any preceding claim wherein the outer layer (5) is of knitted polyester material.

6. A laminated support (1) as claimed in any preceding claim wherein the outer layer (5) has a thickness in the range 0.5mm to 30mm.

7. A laminated support (1) as claimed in claim 6 wherein the outer layer (5) has a thickness in the range 3mm to 6mm.

8. A laminated support (1) as claimed in any preceding claim wherein the outer layer (5) has a stretchability in the range 20% to 200%.

9. A laminated support (1) as claimed in claim 8 wherein the outer layer (5) has a stretchability in the range 40% to 140%.

10. A laminated support (1) as claimed in any preceding claim wherein the outer layer (5) is adhesively bonded to the viscoelastic layer (4).

11. A laminated support (30) as claimed in any preceding claim wherein outer layers (5) are bonded to both the top surface (6) and a bottom surface (21) of the viscoelastic layer (4).

12. A laminated support (20) as claimed in any of claims 1 to 10 wherein the bottom surface (21) of the viscoelastic foam layer (4) is laminated onto a support substrate (22).

13. A laminated support (1) as claimed in claim 12 wherein the support substrate (22) comprises a standard foam or a combustion modified foam.

14. A laminated support (1) as claimed in any preceding claim further including a vapour permeable outer cover (2).

15. A mattress incorporating a support element as claimed in any preceding claim.

16. A cushion incorporating a support element as claimed in any of claims 1 to 14.

17. A pillow incorporating a support element as claimed in any of claims 1 to 14.

## Patentansprüche

1. Laminiertes Körperkontakt-Auflageelement (1) für eine Matratze, ein Kissen oder dergleichen, umfassend eine innere Schicht (4) aus viskoelastischem Schaumstoff und eine luftdurchlässige äußere Schicht (5) aus dehnbarem Material, die auf eine Oberseite (6) der viskoelastischen Schaumstoffschicht (4) laminiert ist, **dadurch gekennzeichnet, dass** die äußere Schicht (5) einen äußerst atmungsfähigen dreidimensionalen Stoff umfasst, der eine Luftschicht über der viskoelastischen Schaumstoffschicht (4) bildet, wobei die maximale Dehnung des Materials der äußeren Schicht (5) geringer ist als die Bruchdehnung des darunter liegenden Materials der viskoelastischen Schaumstoffschicht (4).

2. Laminierte Auflage nach Anspruch 1, wobei die äußere Schicht (5) einen Abstandshalterstoff (7, 8, 9) umfasst.

3. Laminierte Auflage (1) nach einem der vorangehenden Ansprüche, wobei die äußere Schicht (5) einen beabstandeten gestrickten Stoff mit einem Paar voneinander beabstandeter gestrickter Schichten (7, 8) mit sich zwischen den genannten gestrickten Schichten (7, 8) erstreckenden Abstandshaltergarnen (9) umfasst, wobei eine der genannten gestrickten Schichten (7) auf die Oberseite (6) der viskoelastischen Schaumstoffschicht (4) laminiert ist.

4. Laminierte Auflage (1) nach einem der vorangehenden Ansprüche, wobei die Zugfestigkeit des Materials der äußeren Schicht (5) größer ist als die Zugfestigkeit des Materials der viskoelastischen Schaumstoffschicht (4).

5. Laminierte Auflage (1) nach einem der vorangehenden Ansprüche, wobei die äußere Schicht (5) aus gestricktem Polyestermaterial besteht.

6. Laminierte Auflage (1) nach einem der vorangehenden Ansprüche, wobei die äußere Schicht (5) eine Dicke im Bereich von 0,5 mm bis 30 mm hat.

7. Laminierte Auflage (1) nach Anspruch 6, wobei die äußere Schicht (5) eine Dicke im Bereich von 3 mm bis 6 mm hat.

8. Laminierte Auflage (1) nach einem der vorangehenden Ansprüche, wobei die äußere Schicht (5) eine Dehnbarkeit im Bereich von 20% bis 200% hat.

9. Laminierte Auflage (1) nach Anspruch 8, wobei die äußere Schicht (5) eine Dehnbarkeit im Bereich von 40% bis 140% hat.

10. Laminierte Auflage (1) nach einem der vorangehenden Ansprüche, wobei die äußere Schicht (5) an die viskoelastische Schicht (4) geklebt ist.

11. Laminierte Auflage (30) nach einem der vorangehenden Ansprüche, wobei äußere Schichten (5) an die Oberseite (6) und eine Unterseite (21) der viskoelastischen Schicht (4) geklebt sind.

12. Laminierte Auflage (20) nach einem der Ansprüche 1 bis 10, wobei die Unterseite (21) der viskoelastischen Schaumstoffschicht (4) auf ein Trägermaterial (22) laminiert ist.

13. Laminierte Auflage (1) nach Anspruch 12, wobei das Trägermaterial (22) einen Standardschaumstoff oder einen durch Verbrennung modifizierten Schaumstoff umfasst.

14. Laminierte Auflage (1) nach einem der vorangehenden Ansprüche, weiter umfassend eine dampfdurchlässige äußere Hülle (2).

15. Matratze mit einem Auflageelement nach einem der vorangehenden Ansprüche.

16. Kissen mit einem Auflageelement nach einem der Ansprüche 1 bis 14.

17. Kopfkissen mit einem Auflageelement nach einem der Ansprüche 1 bis 14.

## Revendications

1. Elément stratifié de soutien pour contact corporel (1) pour matelas, coussin ou objet semblable, comprenant une couche intérieure (4) en matériau de mousse viscoélastique et une couche extérieure perméable à l'air (5) en matériau extensible stratifiée sur une surface supérieure (6) de la couche en mousse viscoélastique (4), **caractérisé par le fait que** la couche extérieure (5) comprend un tissu tridimensionnel extrêmement respirant qui forme une couche d'air au-dessus de la couche en mousse viscoélastique (4), l'extensibilité maximum du matériau de la couche extérieure (5) étant inférieure à l'extensibilité à la rupture du matériau de la couche en mousse viscoélastique sous-jacente (4).

2. Soutien stratifié conforme à la revendication 1, où la couche extérieure (5) comprend un tissu d'espacement (7, 8, 9).

3. Soutien stratifié (1) conforme à une quelconque des revendications précédentes, où la couche extérieure (5) comprend un tissu à mailles espacé muni d'une paire de couches à mailles espacées (7, 8) avec des fils d'espacement (9) s'étendant entre lesdites couches à mailles (7, 8), une desdites couches à mailles (7) étant stratifiée sur la surface supérieure (6) de la couche de mousse viscoélastique (4).

4. Soutien stratifié (1) conforme à une quelconque des revendications précédentes, où la force de traction du matériau de la couche extérieure (5) est supérieur à la force de traction du matériau de la couche en mousse viscoélastique (4).

5. Soutien stratifié (1) conforme à une quelconque des revendications précédentes, où la couche extérieure (5) est en matériau polyester à mailles.

6. Soutien stratifié (1) conforme à une quelconque des revendications précédentes, où la couche extérieure (5) a une épaisseur dans la gamme allant de 0,5 mm à 30 mm.

7. Soutien stratifié (1) conforme à la revendication 6, où la couche extérieure (5) a une épaisseur dans la gamme allant de 3 mm à 6 mm.

8. Soutien stratifié (1) conforme à une quelconque des revendications précédentes, où la couche extérieure (5) a une extensibilité dans la gamme allant de 20% à 200%.

9. Soutien stratifié (1) conforme à la revendication 8, où la couche extérieure (5) a une extensibilité dans la gamme allant de 40% à 140%.

10. Soutien stratifié (1) conforme à une quelconque des revendications précédentes, où la couche extérieure (5) est contrecollée par adhésif à la couche viscoélastique (4).

11. Soutien stratifié (30) conforme à une quelconque des revendications précédentes, où des couches extérieures (5) sont collées à la surface supérieure (6) ainsi qu'à une surface inférieure (21) de la couche viscoélastique (4).

12. Soutien stratifié (20) conforme à une quelconque des revendications 1 à 10, où la surface inférieure (21) de la couche en mousse viscoélastique (4) est stratifiée sur un substrat de soutien (22).

13. Soutien stratifié (1) conforme à la revendication 12, où le substrat de soutien (22) comprend une mousse standard ou une mousse résistante au feu.

14. Soutien stratifié (1) conforme à une quelconque des revendications précédentes, comprenant de plus une housse extérieure perméable à la vapeur (2).

15. Matelas comprenant un élément de soutien conforme à une quelconque des revendications précédentes.

16. Coussin comprenant un élément de soutien conforme à une quelconque des revendications 1 à 14.

17. Oreiller comprenant un élément de soutien conforme à une quelconque des revendications 1 à 14.
